# EUROPEAN PATENT APPLICATION

(11) **EP 4 715 254 A1**
(43) Date of publication of application: **25.03.2026**
(21) Application number: 24911183.2
(22) Date of filing: 25.12.2024
(51) Int. Cl.: F21S 45/50, G02B 27/01, G03B 21/16, B60Q 1/50, B60Q 1/04

(54) **IMAGING DEVICE, PROJECTION DEVICE, VEHICLE LAMP DEVICE, DISPLAY DEVICE, AND VEHICLE**

(30) Priority: 28.12.2023 CN 202311862395
(71) Applicant: Shenzhen Yinwang Intelligent Technologies Co., Ltd., Shenzhen, Guangdong 518110 (CN)
(72) Inventor: LEI, Ying, Shenzhen, Guangdong 518129 (CN); LIAO, Zhiquan, Shenzhen, Guangdong 518129 (CN)
(74) Representative: Körber, Martin Hans
(86) International application number: PCT/CN2024/142159
(87) International publication number: WO 2025/140259

(57) **Abstract**

Embodiments of this application provide an imaging apparatus, a projection apparatus, a vehicle lamp apparatus, a display apparatus, and a transportation means, and pertain to the field of imaging technologies. The imaging apparatus includes a thermoelectric cooler, an imaging device, and a housing. The housing surrounds a sealed cavity, the thermoelectric cooler and the imaging device are disposed inside the sealed cavity, the thermoelectric cooler is configured to adjust a temperature of the imaging device, and the imaging device generates imaging light emitted to the outside of the housing. In the imaging apparatus provided in embodiments of this application, the thermoelectric cooler and the imaging device are disposed in the sealed cavity, to ensure usage of the imaging device in a harsh environment.

## Description

This application claims priority to Chinese Patent Application No. 202311862395.1, filed with the China National Intellectual Property Administration on December 28, 2023 and entitled "IMAGING APPARATUS, PROJECTION APPARATUS, VEHICLE LAMP APPARATUS, DISPLAY APPARATUS, AND TRANSPORTATION MEANS", which is incorporated herein by reference in its entirety.

### TECHNICAL FIELD

Embodiments of this application relate to the field of imaging technologies, and in particular, to an imaging apparatus, a projection apparatus, a vehicle lamp apparatus, a display apparatus, and a transportation means.

### BACKGROUND

With development of transportation means such as automobiles, a vehicle lamp, for example, an adaptive driving beam (adaptive driving beam, ADB) headlamp or a tail lamp having a projection function, of the transportation means may be implemented by using a display apparatus having a pixelated projection function. The display apparatus may use a light-emitting device like a light-emitting diode (light-emitting diode, LED) or a laser as a light source, and perform pixelated modulation on light by using an imaging device like a liquid crystal on silicon (liquid crystal on silicon, LCOS) or a digital micromirror device (digital micromirror device, DMD), to implement pixelated lighting and improve traveling interaction and safety.

In a related technology, the vehicle lamp includes a light source, a reflector, an imaging device, and a lens. A light beam emitted by the light source illuminates a surface of the imaging device through the reflector. After pixelated modulation is performed on the light beam by using the imaging device, the light beam is reflected to the lens, and is projected by the lens onto a target (for example, a road surface), to perform imaging on the target. However, the imaging device may be unusable due to a harsh environment inside the vehicle lamp, for example, a high ambient temperature and high humidity inside the lamp.

Therefore, how to make an imaging device usable in a harsh environment (for example, an environment in a vehicle lamp) becomes an urgent problem to be resolved.

### SUMMARY

Embodiments of this application provide an imaging apparatus, a projection apparatus, a vehicle lamp apparatus, a display apparatus, and a transportation means, to ensure usage of an imaging device in a harsh environment.

A first aspect of this application provides an imaging apparatus. The imaging apparatus is configured to generate imaging light emitted to a lens, and the imaging apparatus includes a thermoelectric cooler, an imaging device, and a housing. The housing surrounds a sealed cavity, the thermoelectric cooler and the imaging device are disposed inside the sealed cavity, the thermoelectric cooler is configured to adjust a temperature of the imaging device, and the imaging device generates the imaging light emitted to the outside of the housing.

The thermoelectric cooler and the imaging device are disposed inside the sealed cavity, and the housing can prevent water vapor in a harsh environment from entering the sealed cavity, so that environmental problems such as condensation and corrosion of the thermoelectric cooler and the imaging device are not caused, thereby improving environmental reliability of the thermoelectric cooler and the imaging device, ensuring usage reliability of the thermoelectric cooler and the imaging device in the harsh environment (for example, an environment in a vehicle lamp), and ensuring usage of the imaging device in the harsh environment. In addition, the temperature of the imaging device is adjusted by using the thermoelectric cooler, so that an operating temperature of the imaging device can be effectively controlled to be within an ideal operating temperature range of the imaging device for a long time, thereby improving optical performance of the imaging device used in the harsh environment (for example, the environment in the vehicle lamp), and improving usage reliability of the imaging device in the harsh environment (for example, the environment in the vehicle lamp).

In a possible implementation, the sealed cavity is a vacuum cavity, so that the inside of the sealed cavity is in vacuum, and vacuum sealing can be performed on the imaging device and the thermoelectric cooler, thereby improving usage reliability of the imaging apparatus in the harsh environment.

In a possible implementation, the sealed cavity is filled with at least one type of inert gas. The inert gas is filled in the sealed cavity, so that airtight sealing can be performed on the thermoelectric cooler and the imaging device. Therefore, when the imaging apparatus is in an environment with relatively high humidity, contact between the imaging device and oxygen, water vapor, and the like can be avoided, thereby further improving usage reliability of the thermoelectric cooler and the imaging device in the harsh environment.

In a possible implementation, the inert gas is helium, neon, argon, krypton, xenon, or radon.

In a possible implementation, the imaging device is in contact with the thermoelectric cooler, so that thermal resistance between the imaging device and the thermoelectric cooler can be reduced, and heat dissipation effect can be further improved.

In a possible implementation, the imaging apparatus further includes a first heat conducting layer, and the first heat conducting layer is filled between the thermoelectric cooler and the imaging device.

The first heat conducting layer can transfer heat generated by the imaging device to the thermoelectric cooler in a timely manner, to ensure that an operating temperature of the imaging device is within an optimal operating temperature range. In addition, a gap between the thermoelectric cooler and the imaging device is filled with the first heat conducting layer, so that thermal resistance between the imaging device and the thermoelectric cooler can be reduced, thereby helping further improve heat dissipation effect.

In a possible implementation, the imaging device includes an imaging component, the imaging component is configured to generate the imaging light, and the imaging component is configured to be in contact with the thermoelectric cooler or the first heat conducting layer.

The imaging component is in contact with the first heat conducting layer or the thermoelectric cooler, so that thermal resistance between the imaging component and the thermoelectric cooler can be further reduced, and heat dissipation effect can be further improved.

In a possible implementation, the imaging device includes a substrate and an imaging component, the substrate is disposed between the imaging component and the thermoelectric cooler, and the imaging component is configured to generate the imaging light.

The imaging device is formed by using the substrate and the imaging component to cooperate with the thermoelectric cooler, so that difficulty in cooperation between the imaging device and the thermoelectric cooler can be reduced.

In a possible implementation, the imaging device is a liquid crystal on silicon, a digital micromirror device, a liquid crystal display, a micro-electro-mechanical system, or an organic light-emitting diode.

In a possible implementation, a projection of the thermoelectric cooler covers the imaging device in a thickness direction of the thermoelectric cooler, so that a heat exchange area between the thermoelectric cooler and the imaging device can be increased, and heat dissipation effect can be further improved.

In a possible implementation, the housing includes a transparent part, the imaging device is disposed between the transparent part and the thermoelectric cooler, and the transparent part is configured to transmit light outside the housing to the inside of the housing and transmit the imaging light generated by the imaging device to the outside of the housing, to ensure usage of the imaging device, so that the imaging light forms a target image.

In a possible implementation, a projection of the transparent part covers the imaging device in the thickness direction of the thermoelectric cooler, to ensure that the imaging light generated by the imaging device can be transmitted to the outside of the housing.

In a possible implementation, the transparent part is a glass part or an optical resin part, and can transmit light outside the housing to the inside of the housing and transmit the imaging light to the outside of the housing.

In a possible implementation, the housing further includes a tube housing part capable of heat conduction, and the thermoelectric cooler is in contact with the tube housing part, so that heat transferred by the thermoelectric cooler can be transferred to the outside of the housing, to control an operating temperature of the imaging device to be within an optimal temperature range.

In a possible implementation, the tube housing part is a ceramic tube housing, a metal tube housing, or a thermally conductive plastic tube housing.

A second aspect of this application provides a projection apparatus, including a lens and the imaging apparatus according to any implementation of the first aspect. The imaging apparatus is configured to generate imaging light emitted to the lens.

A third aspect of this application provides a vehicle lamp apparatus, including a vehicle lamp casing and the projection apparatus according to the second aspect. At least a part of the projection apparatus is disposed inside the vehicle lamp casing.

In a possible implementation, the projection apparatus further includes a heat dissipation apparatus and a second heat conducting layer, at least a part of the heat dissipation apparatus is disposed inside the vehicle lamp casing, the second heat conducting layer is filled between the heat dissipation apparatus and the housing of the imaging apparatus, and the thermoelectric cooler of the imaging apparatus is disposed between the imaging device of the imaging apparatus and the second heat conducting layer.

In a possible implementation, the projection apparatus further includes a light source and a reflection unit, the reflection unit is configured to reflect a light beam emitted by the light source to the imaging apparatus, and the imaging apparatus is configured to generate imaging light based on the light beam emitted by the light source.
provides a display apparatus, including an imaging unit and the projection apparatus according to the second aspect. The imaging unit is configured to generate a target image based on imaging light emitted by the projection apparatus.

A fifth aspect of this application provides a transportation means, including the vehicle lamp apparatus according to any implementation of the third aspect or the display apparatus according to the fourth aspect.

In a possible implementation, the display apparatus is mounted in a dashboard of the transportation means.

In a possible implementation, the transportation means further includes a windshield, imaging light emitted by the display apparatus is incident to the windshield, and the windshield reflects the imaging light to a human eye.

### BRIEF DESCRIPTION OF DRAWINGS

FIG. 1 is a diagram of a structure of a vehicle lamp apparatus according to an embodiment of this application;
FIG. 2 is a diagram of a structure of a usage scenario of a display apparatus according to an embodiment of this application;
FIG. 3 is a diagram of a structure in which a display apparatus is mounted on a transportation means according to an embodiment of this application;
FIG. 4 is a diagram of a structure of a first-type imaging apparatus according to an embodiment of this application;
FIG. 5 is a diagram of a structure of a second-type imaging apparatus according to an embodiment of this application;
FIG. 6 is a diagram of a structure of a third-type imaging apparatus according to an embodiment of this application; and
FIG. 7 is a diagram of a structure of a fourth-type imaging apparatus according to an embodiment of this application.

Description of reference numerals:
100: imaging apparatus;
110: housing; 111: transparent part; 112: tube housing part; 113: sealed cavity;
120: imaging device;
121: imaging component; 1211: bonding layer; 1212: silicon substrate layer; 1213: liquid crystal layer; 1214: glass cover layer; 1215: anti-reflection layer;
122: substrate; 123: lead; 124: contact pad;
130: thermoelectric cooler; 131: first substrate; 132: second substrate; 133: semiconductor particle;
140: first heat conducting layer;
200: vehicle lamp apparatus;
210: vehicle lamp casing; 211: lampshade; 212: lamp housing;
220: projection apparatus; 221: lens; 222: body; 223: heat dissipation apparatus; 2231: main body part; 2232: fin part; 224: second heat conducting layer; 225: light source; 226: reflection unit;
300: display apparatus; 400: imaging unit.

### DESCRIPTION OF EMBODIMENTS

In a related technology, a vehicle lamp includes a light source, a collimating lens, a reflector, an imaging device, and a lens. The collimating lens collimates a light beam emitted by the light source. The reflector reflects, to a surface of the imaging device, the light beam collimated by the collimating lens. The imaging device is configured to perform pixelated modulation on the collimated light beam and generate an imaging light beam emitted to the lens. The lens projects the imaging light beam onto a target (for example, a road surface), to perform imaging on the target. However, the imaging device may be unusable due to a harsh environment inside the vehicle lamp, for example, a high ambient temperature and high humidity inside the lamp. Therefore, how to make an imaging device usable in a harsh environment (for example, an environment in a vehicle lamp) becomes an urgent problem to be resolved.

In view of this, embodiments of this application provide an imaging apparatus 100, a projection apparatus 220, a vehicle lamp apparatus 200, a display apparatus 300, and a transportation means. An imaging device 120 and a thermoelectric cooler 130 are disposed in a sealed cavity, so that environmental reliability of the thermoelectric cooler 130 and the imaging device 120 can be improved, and usage reliability of the thermoelectric cooler 130 and the imaging device 120 in a harsh environment (for example, an environment in a vehicle lamp) can be improved. In addition, a temperature of the imaging device 120 is adjusted by using the thermoelectric cooler 130, to control an operating temperature of the imaging device 120 to be within an optimal operating temperature range, so that optical performance of the imaging device 120 can be within an appropriate range, and usage reliability of the imaging device 120 in the harsh environment (for example, the environment in the vehicle lamp) can be improved. Therefore, usage of the imaging device 120 in the harsh environment can be ensured, to meet a use requirement.

The transportation means provided in embodiments of this application may include but is not limited to an automobile, a truck, a motorcycle, a bus, a ship, an airplane, a helicopter, a lawn mower, a recreational vehicle, a playground vehicle, construction equipment, a tram, a golf cart, a train, a hand cart, or the like. In embodiments of this application, an example in which the transportation means is the automobile is used for description. The transportation means may include a vehicle lamp apparatus 200, and the vehicle lamp apparatus 200 may be configured to perform lighting, projection imaging, and the like.

The vehicle lamp apparatus 200 provided in embodiments of this application may include but is not limited to a headlamp (also referred to as a headlight), a fog lamp, or a tail lamp outside the automobile, a lamp or an ambient lamp inside a cockpit, or the like. For example, in embodiments of this application, an example in which the vehicle lamp apparatus 200 is the headlamp outside the automobile is used for description. The vehicle lamp apparatus 200 can perform projection imaging and display lighting, for example, lighting at night.

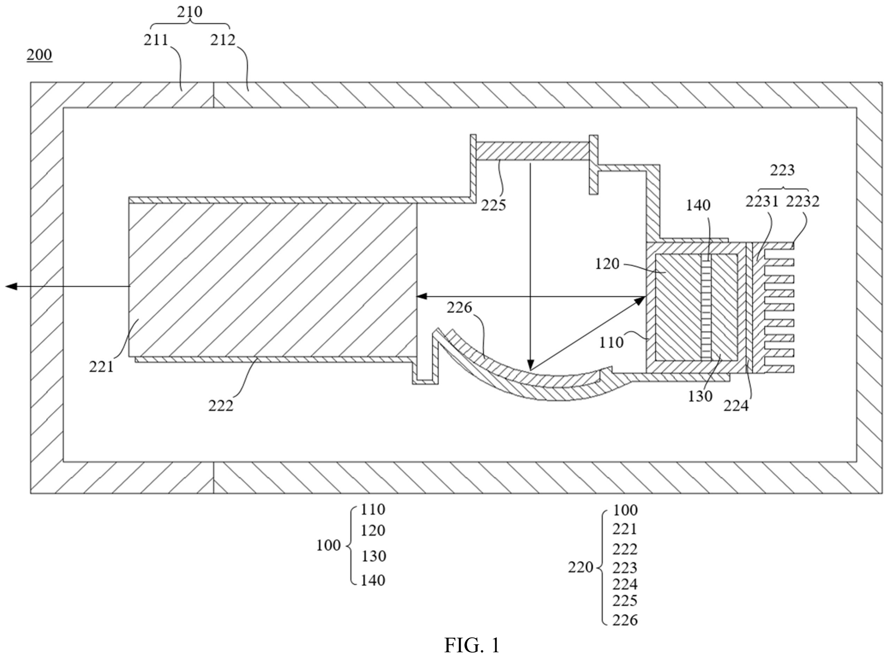

FIG. 1 is a diagram of a structure of a vehicle lamp apparatus according to an embodiment of this application.

Refer to FIG. 1. The vehicle lamp apparatus 200 may include a vehicle lamp casing 210 and a projection apparatus 220. At least a part of the projection apparatus 220 is disposed inside the vehicle lamp casing 210. For example, as shown in FIG. 1, the projection apparatus 220 is disposed inside the vehicle lamp casing 210. Certainly, alternatively, a part of the projection apparatus 220 may be disposed inside the vehicle lamp casing 210, and the other part of the projection apparatus 220 is disposed outside the vehicle lamp casing 210. The projection apparatus 220 is configured to perform projection imaging and display lighting.

Refer to FIG. 1. The vehicle lamp casing 210 includes a lampshade 211 and a lamp housing 212. The lampshade 211 and the lamp housing 212 surround a cavity that accommodates at least a part of the projection apparatus 220, and the lampshade 211 can transmit light, to ensure transmission of imaging light generated by the projection apparatus 220.

Refer to FIG. 1. The projection apparatus 220 includes a lens 221 and an imaging apparatus 100. The imaging apparatus 100 is configured to generate imaging light emitted to the lens 221. The lens 221 is close to the lampshade 211, and the lens 221 is configured to project the imaging light outside the vehicle lamp casing 210, to form an image or perform lighting in front of a transportation means.

Refer to FIG. 1. The projection apparatus 220 may further include a body 222. The lens 221 and the imaging apparatus 100 are separately mounted on the body 222. The body 222 is connected to the lamp housing 212, so that the projection apparatus 220 is fastened to the lamp housing 212.

Refer to FIG. 1. The imaging apparatus 100 includes an imaging device 120 and a thermoelectric cooler 130. The imaging device 120 is configured to generate imaging light emitted to the lens 221. The thermoelectric cooler 130 is configured to adjust a temperature of the imaging device 120, so that an operating temperature of the imaging device 120 is within an optimal operating temperature range.

The imaging device 120 may include but is not limited to a liquid crystal on silicon (liquid crystal on silicon, LCOS), a digital micromirror device (digital micromirror device, DMD), a micro-electro-mechanical system (micro-electro-mechanical systems, MEMS), a liquid crystal display (liquid crystal display, LCD), an organic light-emitting diode (organic light-emitting diode, OLED), a micro-light-emitting diode (micro-light-emitting diode, micro-LED), or the like. For example, in embodiments of this application, the liquid crystal on silicon (LCOS) is used as the foregoing imaging device 120 for description.

To further improve a heat dissipation capability of the imaging apparatus 100, in some possible implementations, as shown in FIG. 1, the projection apparatus 220 may further include a heat dissipation apparatus 223 and a second heat conducting layer 224. At least a part of the heat dissipation apparatus 223 is disposed inside the vehicle lamp casing 210. For example, as shown in FIG. 1, the heat dissipation apparatus 223 may be disposed inside the vehicle lamp casing 210. Certainly, alternatively, a part of the heat dissipation apparatus 223 may be disposed inside the vehicle lamp casing 210, and the other part of the heat dissipation apparatus 223 is disposed outside the vehicle lamp casing 210. The second heat conducting layer 224 is filled between the heat dissipation apparatus 223 and a housing 110 of the imaging apparatus 100.

The heat dissipation apparatus 223 dissipates heat for the imaging apparatus 100, so that the heat dissipation capability of the imaging apparatus 100 can be improved, to ensure normal operation of the imaging apparatus 100. In addition, filling the second heat conducting layer 224 between the housing 110 and the heat dissipation apparatus 223 can reduce thermal resistance between the heat dissipation apparatus 223 and the imaging apparatus 100 and the heat dissipation apparatus 223, and improve the heat dissipation capability of the imaging apparatus 100.

The heat dissipation apparatus 223 may dissipate heat for the imaging apparatus 100 in a heat dissipation manner such as air cooling or liquid cooling. This is not specifically limited herein. In some implementations, the heat dissipation apparatus 223 may be a liquid cooling heat dissipation apparatus, the liquid cooling heat dissipation apparatus may include a pipeline, a liquid cooling plate, and the like, and the liquid cooling plate is configured to perform heat exchange with the imaging apparatus. In some other implementations, the heat dissipation apparatus 223 may alternatively be an air cooling heat dissipation apparatus, the air cooling heat dissipation apparatus may include a heat sink and a fan, and the heat sink is disposed between the imaging apparatus 100 and the fan. In some other implementations, the heat dissipation apparatus 223 may alternatively be a heat sink, and the heat sink is configured to increase a heat exchange area between the imaging apparatus 100 and air.

A specific structure of the heat dissipation apparatus 223 is not limited herein. For example, the heat dissipation apparatus 223 may be a fin heat sink. Refer to FIG. 1. The fin heat sink may include a main body part 2231 and a plurality of fin parts 2232 disposed on a same side of the main body part 2231. The second heat conducting layer 224 is filled between the main body part 2231 and the housing 110 of the imaging apparatus 100. The heat dissipation apparatus 223 can increase the heat exchange area between the imaging apparatus 100 and the air to improve the heat dissipation capability of the imaging apparatus 100.

A specific material of the second heat conducting layer 224 is not limited herein. The second heat conducting layer 224 may include but is not limited to thermally conductive silicone, a silver thermally conductive paste, a copper gasket, a thermally conductive adhesive, thermally conductive silicone grease, thermally conductive gel, a thermally conductive pad, a graphite sheet, a thermally conductive insulating film, a thermally conductive ceramic sheet, or the like.

It should be noted that, in addition to indirect contact between the heat dissipation apparatus 223 and the housing 110 of the imaging apparatus 100 through the second heat conducting layer 224, the second heat conducting layer 224 may be alternatively removed. In this case, the heat dissipation apparatus 223 may be in contact with the housing 110 of the imaging apparatus 100, or the heat dissipation apparatus 223 may not be in contact with the housing 110 of the imaging apparatus 100.

To reduce a size of the projection apparatus 220 and ensure generation of the imaging light, in some possible implementations, as shown in FIG. 1, the projection apparatus 220 may further include a light source 225 and a reflection unit 226. The reflection unit 226 is configured to reflect, to the imaging apparatus 100, a light beam emitted by the light source 225. The imaging apparatus 100 is configured to generate, based on the light beam emitted by the light source 225, the imaging light emitted to the lens 221.

The light source 225 may include but is not limited to a light-emitting diode (light-emitting diode, LED) device, a laser diode (laser diode, LD), or the like.

It should be noted that, when the imaging device 120 is a device like an organic light-emitting diode or a micro-light-emitting diode (micro-light-emitting diode, micro-LED), the light source 225 does not need to be disposed. In this case, the projection apparatus 220 may include the reflection unit 226 or the reflection unit 226 may be removed. The reflection unit 226 may be configured to reflect, to the lens 221, the imaging light emitted by the imaging device 120.

A specific structure of the reflection unit 226 is not limited herein. For example, still refer to FIG. 1. The reflection unit 226 may be a curved mirror, and light emitted by the light source 225 is reflected to the imaging apparatus 100 through a curved surface of the curved mirror.

It should be noted that, in addition to being used in the vehicle lamp apparatus 200 to perform projection imaging and display lighting, the projection apparatus 220 provided in embodiments of this application may be further used in a display apparatus 300 like a projector, a head-up display, augmented reality (augmented reality, AR) glasses, or a television to perform projection imaging. The display apparatus 300 may be mounted in a position like an dashboard, a seat, a front passenger position, or a vehicle roof of the transportation means.

The following uses an example in which the display apparatus 300 is the head-up display for description.

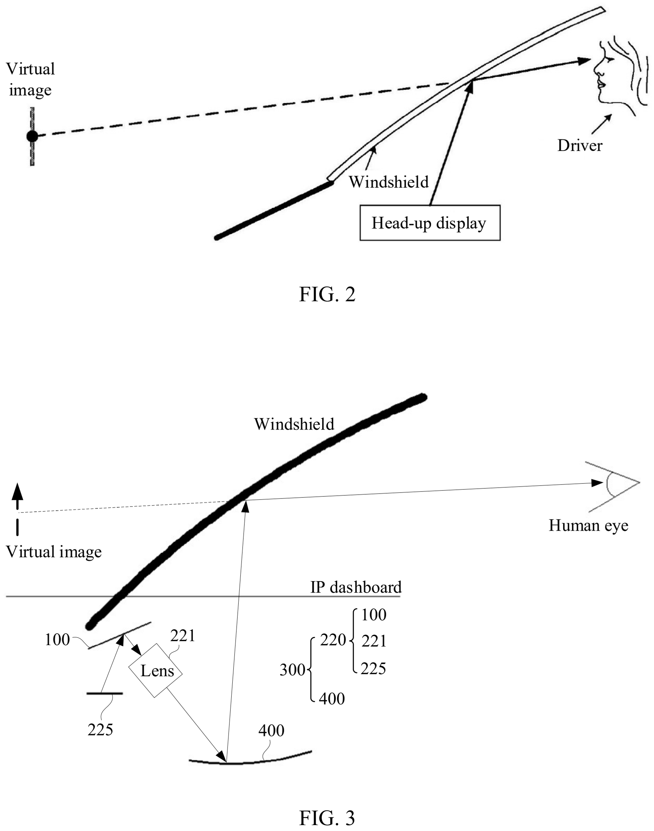

FIG. 2 is a diagram of a structure of a usage scenario of a display apparatus according to an embodiment of this application.

As shown in FIG. 2, a head-up display (HUD for short) may project navigation information, instrument information, and the like into a front field of view of a driver, to avoid that the driver looks down to view the information, and driving safety is affected. After images projected by the HUD are reflected by a windshield (windscreen), virtual images are formed outside a transportation means. These virtual images can be superimposed on a real environment outside the transportation means, so that the driver can achieve augmented reality (augmented reality, AR) visual effect, thereby implementing functions such as AR navigation, adaptive cruise, and lane departure warning. A type of the HUD includes but is not limited to a windshield (windshield, W)-HUD, an augmented reality head-up display (AR-HUD), or the like.

FIG. 3 is a diagram of a structure in which a display apparatus is mounted on a transportation means according to an embodiment of this application.

Refer to FIG. 3. The display apparatus 300 provided in this embodiment of this application may be mounted in a dashboard of the transportation means, to implement hidden mounting. In addition, imaging light emitted by the display apparatus 300 may be incident to a windshield, and the windshield may reflect the imaging light to a human eye, so that the human eye can see a virtual image outside the windshield.

Still refer to FIG. 3. The transportation means may further include the windshield, the imaging light emitted by the display apparatus 300 is incident to the windshield, and the windshield reflects the imaging light to the human eye. Specifically, the display apparatus 300 may include a projection apparatus 220 and an imaging unit 400. The imaging unit 400 may reflect, to the windshield, imaging light emitted by the projection apparatus 220, and the windshield reflects the imaging light to the human eye, to form a target image.

Still refer to FIG. 3. The projection apparatus 220 may include an imaging apparatus 100, a lens 221, and a light source 225. The imaging apparatus 100 is configured to generate, based on a light beam emitted by the light source 225, imaging light that is incident to the lens 221, and the lens 221 is configured to project the imaging light generated by the imaging apparatus 100 onto the imaging unit 400. The imaging unit 400 is configured to generate a target image based on the imaging light emitted by the projection apparatus 220.

A specific structure of the imaging unit 400 is not limited herein. For example, as shown in FIG. 3, the imaging unit 400 may include a curved mirror. The curved mirror is configured to reflect, to the windshield, the imaging light emitted by the projection apparatus 220, and the windshield may reflect the imaging light to the human eye. In addition, because a concave surface of the curved mirror can reflect the imaging light, the image generated by the projection apparatus 220 can be magnified by the curved mirror, and a user can see a magnified virtual image.

The following describes implementations of the imaging apparatus 100 provided in embodiments of this application.

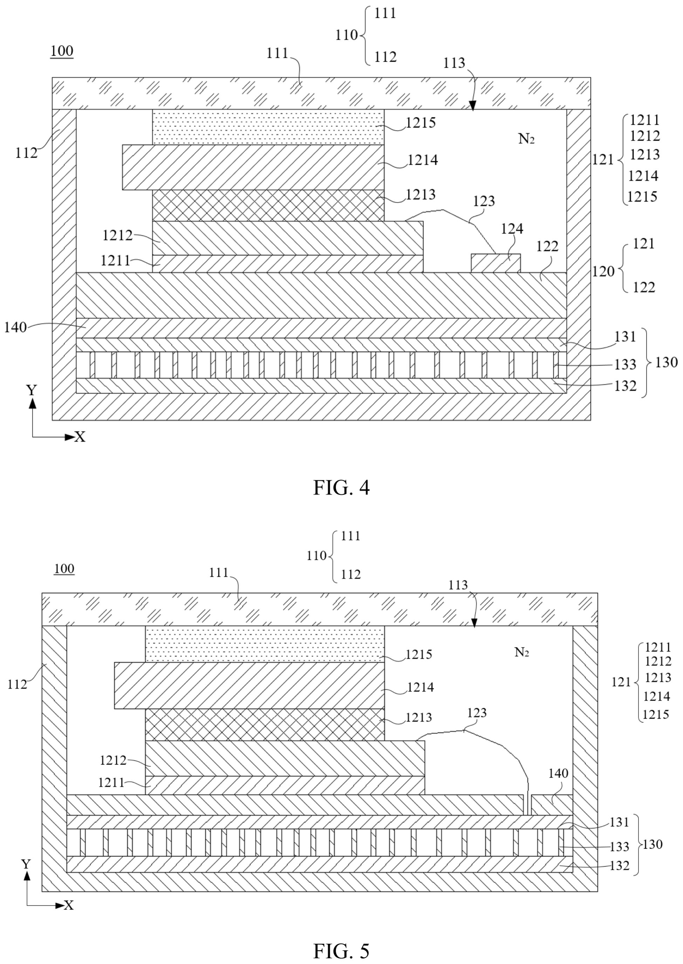

FIG. 4 is a diagram of a structure of a first-type imaging apparatus according to an embodiment of this application.

Refer to FIG. 4. The imaging apparatus 100 provided in this embodiment of this application includes a thermoelectric cooler (thermoelectric cooler, TEC) 130, an imaging device 120, and a housing 110. The housing 110 surrounds a sealed cavity 113, the thermoelectric cooler 130 and the imaging device 120 are disposed inside the sealed cavity 113, the thermoelectric cooler 130 is configured to adjust a temperature of the imaging device 120, and the imaging device 120 generates imaging light emitted to the outside of the housing 110. In an operating process of the imaging apparatus 100, the thermoelectric cooler 130 may transfer heat generated by the imaging device 120 to the housing 110, and the housing 110 may transfer the received heat to the outside of the housing 110, to dissipate heat for the imaging device 120.

The thermoelectric cooler 130 may be configured to reduce the temperature of the imaging device 120 or increase the temperature of the imaging device 120. Specifically, when the imaging apparatus 100 is in a high-temperature environment, a cold end face of the thermoelectric cooler 130 is close to the imaging device 120, a hot end face of the thermoelectric cooler 130 is close to the housing 110, and the thermoelectric cooler 130 cools the imaging device 120, so that the temperature of the imaging device 120 can be controlled to be within an optimal operating temperature range. When the imaging apparatus 100 is in a low-temperature environment, a hot end face of the thermoelectric cooler 130 is close to the imaging device 120, a cold end face of the thermoelectric cooler 130 is close to the housing 110, and the thermoelectric cooler 130 heats the imaging device 120, so that a problem of insufficient performance of the imaging device 120 in the low-temperature environment can be resolved, and no additional heating apparatus needs to be disposed.

With reference to FIG. 4, it can be learned that the thermoelectric cooler 130 and the imaging device 120 are disposed inside the sealed cavity 113, and the housing 110 can prevent water vapor in a harsh environment from entering the sealed cavity 113, in other words, the imaging device 120 and the thermoelectric cooler 130 are in a low-humidity environment, so that environmental problems such as condensation and corrosion of the thermoelectric cooler 130 and the imaging device 120 are not caused, thereby improving environmental reliability of the thermoelectric cooler 130 and the imaging device 120, and ensuring usage reliability of the thermoelectric cooler 130 and the imaging device 120 in the harsh environment (for example, an environment in a vehicle lamp).

In addition, the temperature of the imaging device 120 is adjusted by using the thermoelectric cooler 130, so that an operating temperature of the imaging device 120 can be effectively controlled to be within an ideal operating temperature range of the imaging device 120 for a long time, thereby improving optical performance of the imaging device 120 used in the harsh environment (for example, the environment in the vehicle lamp), and improving usage reliability of the imaging device 120 in the harsh environment (for example, the environment in the vehicle lamp). In addition, temperature control may be further adjusted in real time based on an ambient temperature change, so that the imaging device 120 is always above a dew point, thereby avoiding condensation.

It should be noted that, as shown in FIG. 1, when the imaging apparatus 100 is used in the projection apparatus 220, the thermoelectric cooler 130 is disposed between the imaging device 120 and the second heat conducting layer 224. In addition, the second heat conducting layer 224 is disposed outside the housing 110, the second heat conducting layer 224 is filled between the heat dissipation apparatus 223 and the housing 110, and the second heat conducting layer 224 may transfer, to the heat dissipation apparatus 223, heat transferred by the housing 110.

A specific structure of the thermoelectric cooler 130 is not limited herein. For example, a thermoelectric cooler 130 that can cool or heat the imaging device 120 in the conventional technology may be used.

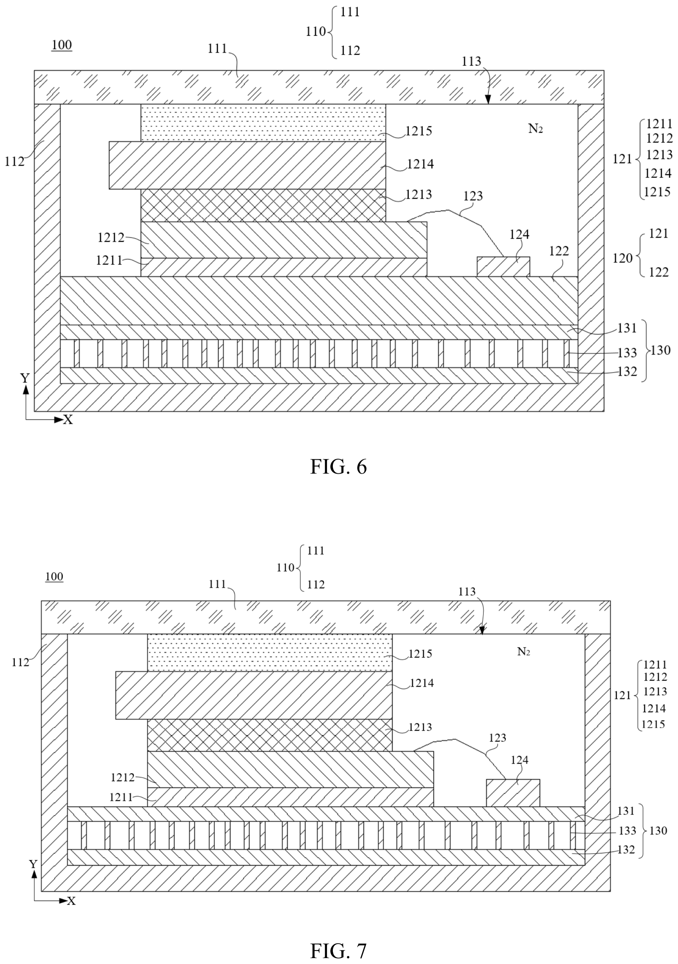

For example, as shown in FIG. 4, the thermoelectric cooler 130 may include a first substrate 131 and a second substrate 132 that are disposed opposite to each other and a semiconductor particle 133. The first substrate 131 and the second substrate 132 are disposed opposite to each other, and the semiconductor particle 133 is disposed between the first substrate 131 and the second substrate 132. The first substrate 131 is disposed between the imaging device 120 and the second substrate 132. The first substrate 131 may be in contact with the imaging device 120 (for example, as shown in FIG. 6 or FIG. 7) or a first heat conducting layer 140 (for example, as shown in FIG. 4 or FIG. 5), or the first substrate 131 may be spaced from the imaging device 120. The second substrate 132 may be in contact with the housing 110 (for example, as shown in FIG. 4), or the second substrate 132 may not be in contact with the housing 110, or the second substrate 132 may be in contact with a third heat conducting layer (not shown in the figure), and the third heat conducting layer is disposed between the thermoelectric cooler 130 and the housing 110.

The semiconductor particle 133 may be a carrier generated by thermoelectric effect. In addition, both the first substrate 131 and the second substrate 132 may be made of a thermally conductive material. For example, each of the first substrate 131 and the second substrate 132 may be a silicon substrate or a ceramic substrate.

To further improve sealing performance of the sealed cavity 113, in some possible implementations, the sealed cavity 113 may be further filled with at least one type of inert gas. For example, the sealed cavity 113 is filled with one type of inert gas (for example, N₂ shown in FIG. 4). Certainly, the sealed cavity 113 may be alternatively filled with a plurality of types of inert gases.

Correspondingly, airtight sealing can be performed on the thermoelectric cooler 130 and the imaging device 120 by filling the sealed cavity 113 with the inert gas, so that when the imaging apparatus 100 is in an environment with relatively high humidity, the inside of the sealed cavity 113 is not at a high-humidity level, thereby further improving usage reliability of the thermoelectric cooler 130 and the imaging apparatus 100 in a harsh environment.

The inert gas may include but is not limited to helium, neon, argon, krypton, xenon, radon, or the like.

In addition to filling the sealed cavity 113 with the inert gas to improve sealing performance of the sealed cavity 113, in some possible implementations, the sealed cavity 113 may alternatively be a vacuum cavity. Vacuum processing is performed on the sealed cavity 113, so that the inside of the sealed cavity 113 is in a vacuum state, thereby forming the vacuum cavity. In this way, vacuum sealing can be performed on the imaging device 120 and the thermoelectric cooler 130, and usage reliability of the thermoelectric cooler 130 and the imaging apparatus 100 in the harsh environment can be further improved.

To provide a heat dissipation capability of the imaging device 120, in some possible implementations, as shown in FIG. 4, the imaging apparatus 100 may further include the first heat conducting layer 140, and the first heat conducting layer 140 is filled between the thermoelectric cooler 130 and the imaging device 120. In an operating process of the imaging apparatus 100, the first heat conducting layer 140 can transfer heat generated by the imaging device 120 to the thermoelectric cooler 130 in a timely manner, so that an operating temperature of the imaging device 120 is within an optimal operating temperature range.

Correspondingly, a gap between the thermoelectric cooler 130 and the imaging device 120 is filled with the first heat conducting layer 140, to avoid that heat generated by the imaging device 120 is transferred to the thermoelectric cooler 130 through the air, thereby reducing thermal resistance between the imaging device 120 and the thermoelectric cooler 130, and helping further improve heat dissipation effect.

A specific material of the first heat conducting layer 140 is not limited herein. The first heat conducting layer 140 may include but is not limited to thermally conductive silicone, a silver thermally conductive paste, a copper gasket, a thermally conductive adhesive, thermally conductive silicone grease, thermally conductive gel, a thermally conductive pad, a graphite sheet, a thermally conductive insulating film, a thermally conductive ceramic sheet, a welding metal layer, or the like.

How to fasten the imaging device 120 is not limited herein. For example, the imaging device 120 may be fastened to the thermoelectric cooler 130 through the first heat conducting layer 140. Specifically, the first heat conducting layer 140 may have bonding performance, and the first heat conducting layer 140 is separately bonded to the thermoelectric cooler 130 and the imaging device 120. The first heat conducting layer 140 connects the imaging device 120 and the thermoelectric cooler 130, so that utilization of the first heat conducting layer 140 can be improved and difficulty in connecting the imaging device 120 and the thermoelectric cooler 130 can be reduced. Alternatively, in some embodiments, the imaging apparatus 100 may further include a fastener (not shown in the figure). The thermoelectric cooler 130 may be fastened to the imaging device 120 through the fastener. The fastener may include but is not limited to a screw, a bolt, a clamping member, or the like.

Refer to FIG. 4. The imaging device 120 may include a substrate 122 and an imaging component 121. The substrate 122 is disposed between the imaging component 121 and the thermoelectric cooler 130, and the imaging component 121 is configured to generate imaging light. Because the first heat conducting layer 140 is filled between the thermoelectric cooler 130 and the imaging device 120, the first heat conducting layer 140 is filled between the substrate 122 and the thermoelectric cooler 130. In other words, the substrate 122 is in indirect contact with the thermoelectric cooler 130 through the first heat conducting layer 140.

Because the imaging device 120 is an LCOS, in an operating process of the imaging apparatus 100, the imaging component 121 is configured to receive a light beam emitted by the light source 225, and generate, based on the light beam emitted by the light source 225, imaging light emitted to the lens 221.

In the operating process of the imaging apparatus 100, the substrate 122 transfers heat generated by the imaging component 121 to the first heat conducting layer 140, the first heat conducting layer 140 transfers the received heat to the thermoelectric cooler 130, the thermoelectric cooler 130 transfers the received heat to the housing 110, and the housing 110 transfers the received heat to the outside of the housing 110, to dissipate heat for the imaging component 121.

The imaging device 120 formed by using the substrate 122 and the imaging component 121 cooperates with the thermoelectric cooler 130, and an existing imaging device 120 in the conventional technology may be used, so that there is no need to redesign the imaging device 120, thereby reducing costs of the imaging device 120. In addition, difficulty in connecting the imaging device 120 to the thermoelectric cooler 130 can be further reduced.

To ensure that heat generated by the imaging component 121 is transferred to the first heat conducting layer 140, a material of the substrate 122 is a thermally conductive material, for example, may be a ceramic substrate.

A specific structure of the imaging component 121 is not limited herein, and may be determined based on a specific type of the imaging device 120. For example, when the imaging device 120 is an LCOS, it can be learned with reference to FIG. 4 that the imaging component 121 may include a silicon substrate layer 1212, a glass cover layer 1214, a bonding layer 1211, a liquid crystal layer 1213, and an anti-reflection layer 1215. The silicon substrate layer 1212 is connected to the substrate 122 through the bonding layer 1211, the liquid crystal layer 1213 is disposed between the glass cover layer 1214 and the silicon substrate layer 1212, and the glass cover layer 1214 is disposed between the anti-reflection layer 1215 and the liquid crystal layer 1213. The anti-reflection layer 1215 is configured to reduce intensity of reflected light and increase intensity of projected light. The bonding layer 1211 may be a solid crystal adhesive, a double-sided tape, or the like.

A circuit board (not shown in the figure) is disposed in the substrate 122. The imaging component 121 is electrically connected to a contact pad 124 on the substrate 122 through a lead 123, and is electrically connected to the circuit board through the contact pad 124. The circuit board transmits an image signal to the imaging component 121, so that the imaging component 121 generates imaging light.

To ensure generation and emission of imaging light, in some possible implementations, as shown in FIG. 4, the housing 110 may further include a transparent part 111, the imaging device 120 is disposed between the transparent part 111 and the thermoelectric cooler 130, and the transparent part 111 is configured to transmit light outside the housing 110 to the inside of the housing 110 and transmit the imaging light generated by the imaging device 120 to the outside of the housing 110, to ensure usage of the imaging device 120, so that the imaging light forms a target image.

A specific material of the transparent part 111 is not limited herein, provided that light can pass through the transparent part 111. For example, as shown in FIG. 4, the transparent part 111 may be a glass part, an optical resin part, or the like. Certainly, the transparent part 111 may be alternatively made of another transparent material. However, when the transparent part 111 is a glass part or an optical resin part, the transparent part can transmit light outside the housing 110 to the inside of the housing 110 and transmit the imaging light to the outside of the housing 110.

To ensure that heat transferred by the thermoelectric cooler 130 is transferred to the outside of the housing 110, in some possible implementations, as shown in FIG. 4, the housing 110 may further include a tube housing part 112 capable of heat conduction. The thermoelectric cooler 130 is in contact with the tube housing part 112, and the tube housing part 112 may transfer, to the outside of the housing 110, the heat transferred by the thermoelectric cooler, to ensure that an operating temperature of the imaging device 120 is within an optimal operating temperature range.

To further improve a heat dissipation capability of the imaging device 120, as shown in FIG. 4, the tube housing part 112 may be of a tubular structure, the transparent part 111 is disposed at an opening of the tube housing part 112, and the transparent part 111 and the tube housing part 112 surround the sealed cavity 113. The tube housing part 112 capable of heat conduction and the transparent part 111 surround the sealed cavity 113, so that not only the thermoelectric cooler 130 and the imaging device 120 can be sealed to improve reliability of the thermoelectric cooler 130 and the imaging device 120, but also heat can be transferred between the inside and the outside of the housing 110 to reduce or increase the temperature of the imaging device 120.

The tube housing part 112 may include but is not limited to a ceramic tube housing, a metal tube housing, a thermally conductive plastic tube housing, a thermally conductive housing part made of another new material having thermal conductivity, or the like. For example, in an example of this application, an example in which the tube housing part 112 is the ceramic tube housing is used for description.

It should be noted that, except that the tube housing part 112 is in contact with the thermoelectric cooler 130, the tube housing part 112 may be spaced from the thermoelectric cooler 130, in other words, a hot end face or a cold end face of the thermoelectric cooler 130 is not in contact with the tube housing part 112. Alternatively, in some embodiments, the imaging apparatus 100 may further include a third heat conducting layer (not shown in the figure), the third heat conducting layer is filled between the tube housing part 112 and the thermoelectric cooler 130, and the third heat conducting layer transfers, to the tube housing part 112, heat transferred by the thermoelectric cooler 130.

A specific material of the third heat conducting layer is not limited herein. The third heat conducting layer may include but is not limited to thermally conductive silicone, a silver thermally conductive paste, a copper gasket, or the like.

To ensure that the imaging device 120 receives the light beam emitted by the light source 225 or emits the imaging light to the outside of the housing 110, in some possible implementations, as shown in FIG. 4, in a thickness direction (for example, a Y direction in FIG. 4) of the thermoelectric cooler 130, a projection of the transparent part 111 may cover the imaging device 120, to ensure that the imaging light generated by the imaging device 120 can be transmitted to the outside of the housing 110, and ensure that the imaging device 120 can receive the light beam emitted by the light source 225.

With reference to FIG. 4, it can be learned that in the thickness direction (for example, the Y direction in FIG. 4) of the thermoelectric cooler 130, an area of the projection of the transparent part 111 is greater than an area of a projection of the imaging device 120. Certainly, the area of the projection of the transparent part 111 may alternatively be equal to the area of the projection of the imaging device 120.

Because the imaging light is generated by using the imaging component 121, in some embodiments, in the thickness direction (for example, the Y direction in FIG. 4) of the thermoelectric cooler 130, the projection of the transparent part 111 may also cover the imaging component 121, to ensure that the imaging component 121 generates the imaging light based on the light beam emitted by the light source 225, or ensure that the imaging light is emitted to the outside of the housing 110.

To improve the heat dissipation capability of the imaging device 120, in some possible implementations, with reference to FIG. 4, it can be learned that in the thickness direction (for example, the Y direction in FIG. 4) of the thermoelectric cooler 130, a projection of the thermoelectric cooler 130 may cover the imaging device 120, so that a heat exchange area between the thermoelectric cooler 130 and the imaging device 120 can be increased, and heat dissipation effect can be further improved.

The imaging device 120 includes the substrate 122 and the imaging component 121, and in the thickness direction (for example, the Y direction in FIG. 4) of the thermoelectric cooler 130, an area of a projection of the substrate 122 is greater than an area of a projection of the imaging component 121. Therefore, the projection of the thermoelectric cooler 130 in the thickness direction (for example, the Y direction in FIG. 4) of the thermoelectric cooler 130 needs to cover the substrate 122, to ensure that heat transferred by the substrate 122 can be transferred to the thermoelectric cooler 130 through the first heat conducting layer 140.

With reference to FIG. 4, it can be learned that in the thickness direction (for example, the Y direction in FIG. 4) of the thermoelectric cooler 130, an area of the projection of the thermoelectric cooler 130 is equal to the area of the projection of the substrate 122. Certainly, the area of the projection of the thermoelectric cooler 130 may alternatively be greater than the area of the projection of the substrate 122.

FIG. 5 is a diagram of a structure of a second-type imaging apparatus according to an embodiment of this application.

A difference between FIG. 5 and FIG. 4 lies in a structure of the imaging device 120. Specifically, refer to FIG. 5. The substrate 122 is removed from the imaging device 120, and the imaging component 121 is indirectly in contact with the thermoelectric cooler 130 through the first heat conducting layer 140, so that thermal resistance between the imaging device 120 and the thermoelectric cooler 130 can be reduced, thereby helping further improve the heat dissipation capability of the imaging device 120.

Because the substrate 122 is removed, to ensure that the imaging component 121 can generate imaging light, the circuit board configured to transfer an image signal to the imaging component 121 may be integrated into the thermoelectric cooler 130, or may be integrated inside the tube housing part 112, or may be disposed outside the housing 110. For example, in this embodiment of this application, the circuit board may be integrated into the thermoelectric cooler 130, and the lead 123 is electrically connected to the circuit board through the contact pad 124 disposed on the thermoelectric cooler 130.

To ensure that the imaging component 121 is electrically connected to the circuit board, the first heat conducting layer 140 may have a via for the lead 123 to pass through. Certainly, the lead 123 may be alternatively electrically connected to the imaging component 121 and the circuit board in another manner. For example, a lead groove may be disposed on an inner wall of the tube housing part 112, and a part of the lead 123 is disposed in the lead groove and is electrically connected to the circuit board.

In the foregoing content, the first heat conducting layer 140 is disposed between the imaging device 120 and the thermoelectric cooler 130. However, considering that the first heat conducting layer 140 also has thermal resistance, to further reduce thermal resistance of the imaging apparatus 100, the imaging device 120 may be in contact with the thermoelectric cooler 130, to further reduce thermal resistance between the imaging device 120 and the thermoelectric cooler 130, thereby further improving heat dissipation effect. The following describes a structure of the imaging apparatus 100 in which the imaging device 120 is in contact with the thermoelectric cooler 130.

With reference to FIG. 5, it can be learned that, because the imaging component 121 has the bonding layer 1211, the imaging component 121 may be connected to the first heat conducting layer 140 through the bonding layer 1211, and the imaging component 121 is fastened to the thermoelectric cooler 130 through the first heat conducting layer 140. Certainly, the imaging component 121 may be alternatively fastened to the thermoelectric cooler 130 in another manner. In addition, in some examples, the bonding layer 1211 may be alternatively removed from the imaging component 121.

FIG. 6 is a diagram of a structure of a third-type imaging apparatus according to an embodiment of this application.

A difference between FIG. 6 and FIG. 4 lies in that the first heat conducting layer 140 is removed. Specifically, refer to FIG. 6. The imaging device 120 includes the substrate 122 and the imaging component 121, the substrate 122 is disposed between the imaging component 121 and the thermoelectric cooler 130, and the substrate 122 is in contact with the thermoelectric cooler 130, so that thermal resistance between the substrate 122 and the thermoelectric cooler 130 can be reduced, thereby helping further improve the heat dissipation capability of the imaging component 121.

To simplify the structure of the imaging apparatus 100, the substrate 122 may be fastened to the thermoelectric cooler 130. For example, the substrate 122 may be fastened to the thermoelectric cooler 130 in a welding manner. Certainly, the substrate 122 may be alternatively fastened to the thermoelectric cooler 130 in another manner, for example, clamping or bonding.

FIG. 7 is a diagram of a structure of a fourth-type imaging apparatus according to an embodiment of this application.

A difference between FIG. 7 and FIG. 6 lies in that the substrate 122 is removed from the imaging device 120. Specifically, refer to FIG. 7. The imaging device 120 includes the imaging component 121, the imaging component 121 is configured to be in contact with the thermoelectric cooler 130, and the imaging component 121 is configured to generate imaging light. The imaging component 121 is in contact with the thermoelectric cooler 130, so that thermal resistance between the imaging component 121 and the thermoelectric cooler 130 can be further reduced, heat dissipation effect can be further improved, and performance and reliability of the imaging device 120 can be improved.

Because the substrate 122 is removed, to ensure that the imaging component 121 can generate imaging light, the circuit board configured to transfer an image signal to the imaging component 121 may be integrated into the thermoelectric cooler 130, or may be integrated inside the tube housing part 112, or may be disposed outside the housing 110. For example, in this embodiment of this application, the circuit board may be integrated into the thermoelectric cooler 130, and the lead 123 is electrically connected to the circuit board through the contact pad 124 disposed on the thermoelectric cooler 130.

To simplify the structure of the imaging apparatus 100, the imaging component 121 may be fastened to the thermoelectric cooler 130. For example, the imaging component 121 may be fastened to the thermoelectric cooler 130 in a welding manner.

With reference to FIG. 7, it can be learned that, because the imaging component 121 has the bonding layer 1211, the imaging component 121 may be fastened to the thermoelectric cooler 130 through the bonding layer 1211. Certainly, the bonding layer 1211 may be alternatively removed from the imaging component 121. In this case, the imaging component 121 may be alternatively fastened to the thermoelectric cooler 130 in another manner.

In descriptions of embodiments of this application, it should be noted that, unless otherwise clearly specified and limited, the terms "mount", "connection", and "connect" should be understood in a broad sense, for example, may be a fixed connection, or may be an indirect connection through an intermediate medium, or may be internal communication between two elements or an interaction relationship between two elements. A person of ordinary skill in the art may understand specific meanings of the foregoing terms in embodiments of this application according to a specific situation.

In embodiments of this application, it is implied that an apparatus or element in question needs to have a particular orientation, or needs to be constructed and operated in a particular orientation, and therefore cannot be construed as a limitation on embodiments of this application. In the descriptions of embodiments of this application, unless otherwise exactly and specifically specified, "a plurality of" means two or more.

In the specification, claims, and accompanying drawings of embodiments of this application, the terms "first", "second", "third", "fourth", and the like (if existent) are intended to distinguish between similar objects but do not necessarily indicate a specific order or sequence. It should be understood that data used in such a way is interchangeable in appropriate circumstances, so that embodiments of this application described herein can be implemented, for example, in orders other than those illustrated or described herein. In addition, the terms "include", "have", and any variants thereof are intended to cover non-exclusive inclusion. For example, a process, method, system, product, or device including a series of steps or units is not necessarily limited to those clearly listed steps or units, but may include other steps or units that are not clearly listed or are inherent to the process, method, product, or device.

The term "a plurality of" in this specification refers to two or more. The term "and/or" in this specification is merely an association relationship of associated objects, and indicates that three relationships may exist. For example, A and/or B may indicate the following three cases: Only A exists, both A and B exist, and only B exists. In addition, the character "/" in this specification usually indicates an "or" relationship between associated objects, and the character "/" in the formula indicates a "division" relationship between the associated objects.

It may be understood that various numbers in embodiments of this application are merely used for differentiation for ease of description, and are not used to limit the scope of embodiments of this application.

It may be understood that in embodiments of this application, sequence numbers of processes do not mean a sequence of execution. The sequence of execution of the processes should be determined according to functions and internal logic of the processes, and should not constitute any limitation on an implementation process of embodiments of this application.

## Claims

1. An imaging apparatus, wherein the imaging apparatus is configured to generate imaging light emitted to a lens, and the imaging apparatus comprises a thermoelectric cooler, an imaging device, and a housing; and
the housing surrounds a sealed cavity, the thermoelectric cooler and the imaging device are disposed inside the sealed cavity, the thermoelectric cooler is configured to adjust a temperature of the imaging device, and the imaging device generates the imaging light emitted to the outside of the housing.

2. The imaging apparatus according to claim 1, wherein the sealed cavity is a vacuum cavity or the sealed cavity is filled with at least one type of inert gas.

3. The imaging apparatus according to claim 2, wherein the inert gas is helium, neon, argon, krypton, xenon, or radon.

4. The imaging apparatus according to any one of claims 1 to 3, wherein the imaging device is in contact with the thermoelectric cooler.

5. The imaging apparatus according to any one of claims 1 to 3, wherein the imaging apparatus further comprises a first heat conducting layer, and the first heat conducting layer is filled between the thermoelectric cooler and the imaging device.

6. The imaging apparatus according to any one of claims 1 to 5, wherein the imaging device comprises an imaging component, the imaging component is configured to generate the imaging light, and the imaging component is configured to be in contact with the thermoelectric cooler or the first heat conducting layer.

7. The imaging apparatus according to any one of claims 1 to 5, wherein the imaging device comprises a substrate and an imaging component, the substrate is disposed between the imaging component and the thermoelectric cooler, and the imaging component is configured to generate the imaging light.

8. The imaging apparatus according to any one of claims 1 to 7, wherein the imaging device is a liquid crystal on silicon, a digital micromirror device, a liquid crystal display, a micro-electro-mechanical system, or an organic light-emitting diode.

9. The imaging apparatus according to any one of claims 1 to 8, wherein a projection of the thermoelectric cooler covers the imaging device in a thickness direction of the thermoelectric cooler.

10. The imaging apparatus according to any one of claims 1 to 9, wherein the housing comprises a transparent part, the imaging device is disposed between the transparent part and the thermoelectric cooler, and the transparent part is configured to transmit light outside the housing to the inside of the housing and transmit the imaging light generated by the imaging device to the outside of the housing.

11. The imaging apparatus according to claim 10, wherein a projection of the transparent part covers the imaging device in the thickness direction of the thermoelectric cooler.

12. The imaging apparatus according to claim 10 or 11, wherein the transparent part is a glass part or an optical resin part.

13. The imaging apparatus according to any one of claims 10 to 12, wherein the housing further comprises a tube housing part capable of heat conduction, and the thermoelectric cooler is in contact with the tube housing part.

14. The imaging apparatus according to claim 13, wherein the tube housing part is a ceramic tube housing, a metal tube housing, or a thermally conductive plastic tube housing.

15. A projection apparatus, comprising a lens and the imaging apparatus according to any one of claims 1 to 14, wherein the imaging apparatus is configured to generate imaging light emitted to the lens.

16. A vehicle lamp apparatus, comprising a vehicle lamp casing and the projection apparatus according to claim 15, wherein at least a part of the projection apparatus is disposed inside the vehicle lamp casing.

17. The vehicle lamp apparatus according to claim 16, wherein the projection apparatus further comprises a heat dissipation apparatus and a second heat conducting layer, at least a part of the heat dissipation apparatus is disposed inside the vehicle lamp casing, the second heat conducting layer is filled between the heat dissipation apparatus and the housing of the imaging apparatus, and the thermoelectric cooler of the imaging apparatus is disposed between the imaging device of the imaging apparatus and the second heat conducting layer.

18. The vehicle lamp apparatus according to claim 16 or 17, wherein the projection apparatus further comprises a light source and a reflection unit, the reflection unit is configured to reflect a light beam emitted by the light source to the imaging apparatus, and the imaging apparatus is configured to generate imaging light based on the light beam emitted by the light source.

19. A display apparatus, comprising an imaging unit and the projection apparatus according to claim 15, wherein the imaging unit is configured to generate a target image based on imaging light emitted by the projection apparatus.

20. A transportation means, comprising the vehicle lamp apparatus according to any one of claims 16 to 18 or the display apparatus according to claim 19.

21. The transportation means according to claim 20, wherein the display apparatus is mounted in a dashboard of the transportation means.

22. The transportation means according to claim 20 or 21, wherein the transportation means further comprises a windshield, imaging light emitted by the display apparatus is incident to the windshield, and the windshield reflects the imaging light to a human eye.
